(19) Europäisches Patentamt / European Patent Office / Office européen des brevets

(11) **EP 4 538 173 A1**

(12) **DEMANDE DE BREVET EUROPEEN**

(43) Date de publication:
**16.04.2025 Bulletin 2025/16**

(21) Numéro de dépôt: **24205760.2**

(22) Date de dépôt: **10.10.2024**

(51) Classification Internationale des Brevets (IPC):
**B64D 1/02** *(2006.01)*     **B63B 22/00** *(2006.01)*
**B63B 22/16** *(2006.01)*     **B64D 25/20** *(2006.01)*

(52) Classification Coopérative des Brevets (CPC):
**B64D 1/02; B63B 22/003; B64D 25/20**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **11.10.2023 FR 2310875**

(71) Demandeur: **Kaino**
**47550 Boe (FR)**

(72) Inventeur: **RIFF, Samuel**
**47550 BOE (FR)**

(74) Mandataire: **Ipside**
**7-9 Allée Haussmann**
**33300 Bordeaux Cedex (FR)**

(54) **MODULE D ÉJECTION DE CARTOUCHES POUR LA LOCALISATION D OBJETS PERDUS EN MER ET SYSTÈME D ÉJECTION ASSOCIÉ**

(57)    L'invention concerne un module d'éjection (100) de cartouches (200) pour la localisation d'objet (1000) ayant sombré en mer, comprenant une enveloppe protectrice (101) rendant ledit module imperméable, comprenant :

au moins deux cartouches (200) comprenant chacune un élément surnageant (201) de masse volumique plus faible que celle de l'eau et visible à la surface de l'eau lorsqu'il est libéré de la cartouche, et

un système de libération (300) des cartouches (200) configuré pour libérer lesdites cartouches (200) et l'élément surnageant (201) compris dans chaque cartouche (200) dans la mer lorsqu'il reçoit un ordre de libération, un calculateur (103) configuré pour transmettre un ordre de libération des cartouches à un intervalle de temps prédéfini au système de libération,

chaque élément surnageant compris dans chacune des cartouches étant, une fois libéré dans la mer, différenciable des autres éléments surnageants à l'œil nu.

[Fig 1]

EP 4 538 173 A1

**Description**

**DOMAINE TECHNIQUE DE L'INVENTION**

Le domaine de l'invention est celui de la localisation d'objets immergés perdus en mer. Un objet peut être un moyen de transport comme un avion, un voilier, ou encore un sous-marin. Il peut également s'agir de containers transportés par des cargos.

Plus précisément, l'invention traite de dispositifs larguant des indicateurs pour la localisation d'un objet immergé.

L'invention trouve notamment des applications dans les domaines de l'aéronautique, le transport maritime et sous-marin.

**ÉTAT DE LA TECHNIQUE**

Il est connu de l'art antérieur des techniques de libération de traceurs dans des situations de recherche ou de sauvetage d'aéronefs ayant sombré en mer. Les traceurs peuvent être des éléments de localisation, ou encore des poudres ou encres fluorescentes et flottantes. Ces traceurs peuvent ainsi être localisés par des équipes de secouristes ou de recherche sur des bateaux, ou à l'aide d'images issues de satellites ou d'aéronefs survolant une zone où l'aéronef a eu un problème et perdu contact avec les centres de contrôle.

Certains dispositifs présentent des cartouches immersibles retenues dans un contenant, qui, une fois libérées, remontent à la surface et libèrent l'élément de localisation. Lorsqu'une seule cartouche est libérée, elle ne donne qu'un nombre d'indices très limité sur la position de l'aéronef ayant sombré en mer. Seule une position de la poudre à la surface de la mer est obtenue.

A partir de cette seule information, il reste très compliqué de savoir précisément où se situe l'épave de l'aéronef. En effet, les courants, la profondeur de la mer à l'endroit du naufrage, les conditions atmosphériques sont autant de facteurs qui vont impacter la trajectoire et la dispersion de la poudre contenue par exemple dans les cartouches à la dérive.

Des solutions ont été imaginées, en libérant des poudres de trois différentes couleurs dans un contenant configuré pour libérer la poudre à différentes profondeurs prédéfinies. Là encore, les informations obtenues par la libération des poudres sont encore limitées et elles ne sont pas forcément adaptées à chaque configuration. En effet, si l'aéronef fait naufrage dans une zone peu profonde, il n'y aura qu'une seule poudre libérée, et donc, pas suffisamment d'informations pour retrouver l'épave rapidement.

De plus, il n'y a pas d'indication temporelle sur le moment du naufrage. Ainsi, n'avoir qu'une seule poudre à la surface peut à la fois signifier que le naufrage a eu lieu dans un endroit d'une profondeur inférieure à celle pour laquelle le deuxième contenant était configuré pour libérer la poudre, ou alors que l'aéronef étaient encore en train de sombrer et n'avait pas atteint la profondeur de libération du deuxième contenant. Il peut alors être nécessaire de croiser un grand nombre d'informations issues de plusieurs sources (carte de fonds marins, images satellites sur plusieurs heures de l'emplacement de la poudre, plan de vol de l'aéronef, etc.) pour estimer la véritable position de l'aéronef, ce qui représente une difficulté pour retrouver une épave le plus rapidement et simplement possible. De plus, ce genre de dispositifs doit être réglé et conditionné en usine. Il ne peut pas être paramétré facilement, et être configuré à chaque situation.

En outre, ces dispositifs sont adaptés aux aéronefs seulement, alors que d'autres moyens de transport ou de stockage peuvent aussi subir un naufrage, comme un sous-marin, un bateau, ou même un container transporté sur un cargo.

Il n'existe pas de système universel, qui s'adapte à une utilisation à la fois pour divers moyens de transport ou de stockage et qui permette de localiser rapidement et de manière fiable un appareil ou un objet ayant sombré en mer.

**EXPOSÉ DE L'INVENTION**

La présente invention vise à remédier à tout ou partie des inconvénients de l'état de la technique cités ci-dessus.

L'invention concerne un module d'éjection de cartouches pour la localisation d'objets ayant sombré en mer, comprenant une enveloppe protectrice rendant ledit module imperméable.

Le module d'éjection comprend au moins deux cartouches comprenant chacune un élément surnageant de masse volumique plus faible que celle de l'eau et visible à la surface de l'eau lorsqu'il est libéré de la cartouche, et un système de libération des cartouches configuré pour libérer lesdites cartouches et l'élément surnageant compris dans chaque cartouche dans la mer lorsqu'il reçoit un ordre de libération.

En outre, le module d'éjection comprend un calculateur configuré pour transmettre un ordre de libération des cartouches à un intervalle de temps prédéfini au système de libération.

L'invention peut comprendre trois cartouches, comprenant chacune un élément surnageant. L'élément surnageant compris dans l'une des trois cartouches peut être d'une couleur différente des éléments surnageants des deux autres cartouches de telle sorte que les trois éléments surnageants issu respectivement des trois cartouches soient différentiables les uns des autres à l'œil nu une fois libérés dans la mer.

L'invention permet avantageusement d'estimer la trajectoire dans l'eau d'un objet qui a sombré en mer, tel qu'un aéronef, un bateau ou encore un container. Ainsi, l'invention permet de simplifier la localisation dudit objet. Cela permet donc, selon la nature de l'objet immergé, à l'équipe de sauvetage d'arriver plus rapidement sur les lieux et de maximiser les chances de sauvetage. De plus, l'invention permet de localiser rapidement des éléments particulièrement polluants des objets ayant sombrés en mer, et donc, de pouvoir les extraire de la mer en limitant leurs impacts sur l'environnement.

De plus, la libération de chaque élément surnageant est réalisée à intervalle de temps prédéfini : cette caractéristique permet d'estimer l'instant auquel l'objet a sombré.

Dans un mode de réalisation particulier, au moins deux éléments surnageants chacun compris dans une cartouche sont, une fois libérés dans la mer, différenciables l'un de l'autre à l'œil nu.

Nous définissons des éléments surnageants comme étant "différenciables à l'œil nu" lorsque, à partir d'images satellites de la mer ou l'observation depuis un avion de recherche ou un bateau en mer à une distance prédéfinie, par exemple d'au moins dix mètres d'au moins deux éléments surnageants, un observateur est capable de discerner et/ou de distinguer les deux éléments surnageants qui ont été libérés dans l'eau.

Cela permet avantageusement de donner une indication temporelle sur la trajectoire suivie par l'objet dans la mer lorsqu'il a sombré.

Dans un mode particulier de réalisation, l'enveloppe protectrice du module d'éjection comprend une coque protectrice extérieure et une couche de maintien intérieure.

Cela permet de protéger le module d'éjection lorsqu'il subit des efforts élevés. Cela permet par exemple de garantir l'intégrité du module d'éjection dans le contexte d'un crash d'avion en mer par exemple, où des efforts très élevés peuvent s'appliquer sur la structure, et donc sur le module d'éjection.

Avantageusement, le module d'éjection présente une forme de cylindre circulaire droit, et dans lequel les cartouches sont disposées selon une configuration radiale, avec une distribution régulière autour de l'axe du module.

Cette caractéristique est particulièrement avantageuse car elle facilite l'extraction des cartouches du module d'éjection et elle permet une répartition homogène de la masse au sein du module d'éjection. Cette disposition est également particulièrement ergonomique. Elle permet de renforcer la fiabilité du module car si celui-ci venait à être endommagé à un endroit, c'est-à-dire si certaines cartouches ne pouvaient plus libérer les éléments surnageants, le module d'éjection permet l'éjection des autres cartouches, positionnées à un autre endroit, non endommagé.

Dans un mode particulièrement avantageux, chaque cartouche comprend un piston comprenant une première extrémité d'une forme en biseau vers l'axe du module et une deuxième extrémité d'une forme pointue vers l'extérieur du module d'éjection permettant de percer un opercule sur une extrémité extérieure de la cartouche pour libérer l'élément surnageant compris dans la cartouche lorsque le piston est en mouvement selon un axe le long de ladite cartouche, le système de libération comprend un moteur pas à pas positionné sur l'axe du module d'éjection relié à un bras comprenant une extrémité en forme en biseau permettant de mettre en mouvement ledit piston lorsque ledit moteur pas à pas est en mouvement.

Ce mode de réalisation est particulièrement avantageux car il permet de libérer de manière fiable et simple l'élément surnageant des cartouches, avec une consommation en énergie très faible.

Avantageusement, l'élément surnageant comprend des particules aptes à réfléchir la lumière.

Cela permet de faciliter la localisation à l'œil nu des éléments surnageants lorsqu'ils sont éclairés, d'une lumière naturelle comme le soleil en plein jour, ou d'une lumière artificielle en pleine nuit par exemple.

Dans un mode de réalisation particulier, le dispositif d'éjection comprend au moins trois cartouches et le système de libération des cartouches est configuré pour libérer les éléments surnageants des cartouches à intervalle de temps régulier.

Il est alors possible, dans ce mode de réalisation, d'estimer plus précisément la trajectoire suivie par l'objet qui a sombré en mer.

Avantageusement, le dispositif d'éjection comprend un dispositif de communication configuré pour envoyer et recevoir des informations issues d'une application.

Cela permet à un opérateur certifié de modifier et mettre à jour certains paramètres comme un délai d'éjection entre deux cartouches, un temps prédéfini après un moment de libération du module ou une profondeur d'éjection, sans avoir à ouvrir le dispositif d'éjection, à l'aide d'une application.

L'invention vise également un système d'éjection comprenant au moins un module d'éjection et au moins un support d'éjection. Le support comprend deux configurations, une première configuration de soutien dans laquelle le support d'éjection supporte le module d'éjection et une configuration d'éjection, dans laquelle le support d'éjection éjecte le module d'éjection.

Ce système est particulièrement avantageux car lorsque le support d'éjection est en configuration d'éjection, le module est ainsi éjecté dans l'eau et peut alors libérer les éléments surnageants de manière fiable, c'est-à-dire sans que ceux-ci ne soient bloqués par des éléments de l'objets par exemple.

Dans un mode de réalisation particulièrement avantageux, au moins deux éléments surnageants compris chacun dans une cartouche sont, une fois libérés dans la mer, différenciables l'un de l'autre à l'œil nu.

Ce mode de réalisation est particulièrement avantageux, car chaque élément surnageant, contenu dans deux cartouches, qu'elles soient ou non dans le même module d'éjection, est différentiable l'un de l'autre, donc permet de suivre l'évolution de la trajectoire de l'objet dans la mer lorsqu'il a sombré.

Alternativement ou en complément, le système d'éjection comprend plusieurs modules d'éjection et un support d'éjection par module d'éjection, chaque support d'éjection étant configuré pour éjecter un module d'éjection à une profondeur prédéfinie, ou à un temps prédéfini, les éléments surnageants compris dans les cartouches d'un même module d'éjection étant, une fois libérés à la mer, différentiables à l'œil nu des éléments surnageants libérés à la mer provenant des cartouches des autres modules d'éjection.

Alternativement ou en complément, les éléments surnageants compris dans les cartouches d'un même module d'éjection ont des paramètres a*, b*, L* situés dans un intervalle prédéfini dans l'espace chromatique L*a*b* CIE 1976, CIE étant l'acronyme de la commission internationale de l'éclairage.

Cela permet avantageusement de mieux distinguer les éléments surnageants provenant des modules d'éjection différents, et donc, d'estimer encore plus précisément la trajectoire suivie par l'objet et estimer depuis combien de temps l'objet a sombré en mer et sous quel angle de chute.

Dans un mode de réalisation particulièrement avantageux, le système d'éjection est configuré pour être positionné sur un objet présentant un risque de perdition en mer.

Ce mode de réalisation permet d'avoir un même système d'éjection universel pour un ensemble d'objets très varié, comme un bateau, un avion, un container ou un sous-marin.

Dans un mode de réalisation avantageux de l'invention, le support d'éjection comprend un mécanisme d'éjection configuré pour éjecter le module d'éjection lorsqu'une valeur issue d'un capteur d'état de l'objet est supérieure à un seuil donné, représentant un comportement anormal de l'objet.

Ce mode de réalisation permet l'éjection du module d'éjection de manière autonome lorsque l'objet rencontre un problème, par exemple structurel. Cela permet de libérer le module d'éjection seulement en cas de besoin, et de manière rapide.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- [Fig 1] est une vue éclatée d'un dispositif d'éjection de cartouches selon un mode de réalisation de l'invention ;

- [Fig 2] est une vue partielle en perspective du dispositif d'éjection selon le même mode de réalisation représenté sur la figure 1 ;

- [Fig 3] est une vue partielle de dessus d'une partie du dispositif d'éjection selon le même mode de réalisation représenté sur la figure 1 ;

- [Fig 4] est une vue de détail du dispositif d'éjection tel qu'il est positionné sur un aéronef selon un mode de réalisation de l'invention ;

- [Fig 5] est une vue d'un assemblage de trois dispositifs d'éjection ;

- [Fig 6] est une vue schématique de la libération du système d'éjection comprenant trois dispositifs d'éjection.

On note, dès à présent, que les figures ne sont pas à l'échelle.

## DESCRIPTION DÉTAILLÉE DE L'INVENTION

### Exemple d'un mode de réalisation particulier

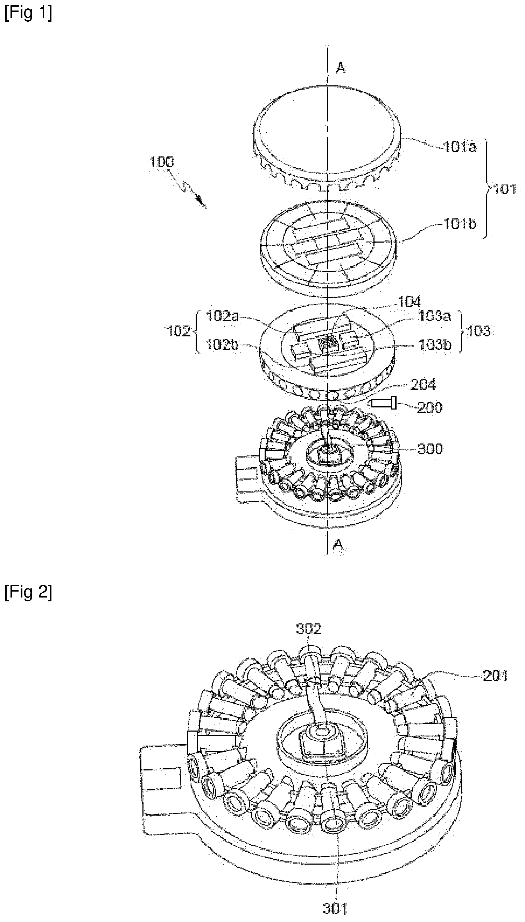

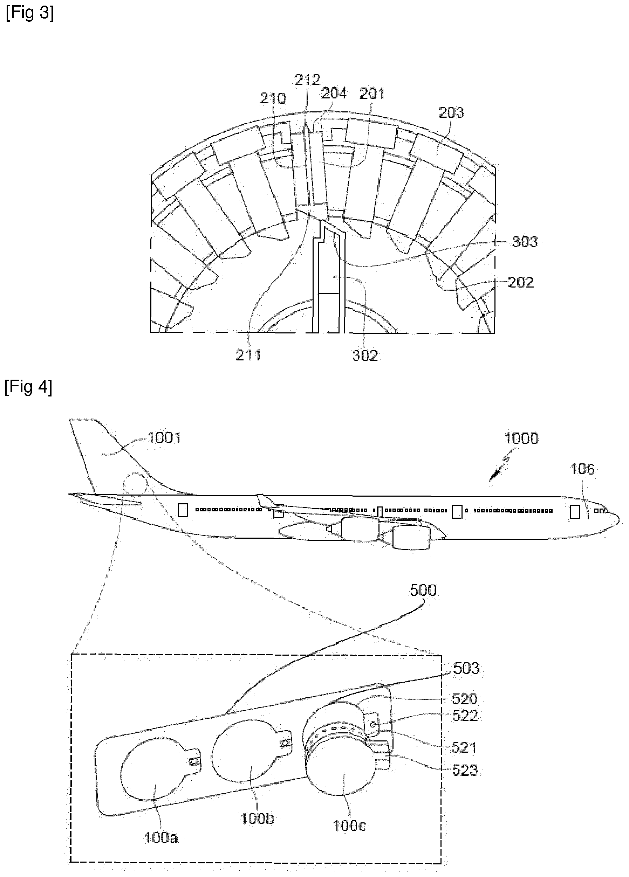

La figure 1 représente un module d'éjection 100 de cartouches 200 selon l'invention. L'invention a pour but de localiser des objets ayant sombré en mer, notamment des aéronefs et plus particulièrement des avions de ligne. La figure 4 représente un exemple d'appareil 1000.

Le fait de sombrer en mer signifie que les objets ne parviennent pas à fonctionner convenablement et coulent sous la surface de l'eau en mer, dans l'océan, ou encore dans un volume d'eau pouvant atteindre une profondeur supérieure à 10 mètres.

Les objets peuvent être, de manière non limitative, des moyens de transport tels que des aéronefs. Il peut s'agir d'avions, d'ULM, de drones aériens survolant des zones maritimes.

Il peut s'agir de navires, comme des plaisanciers, des navires de croisières, des voiliers, des bateaux à moteur ou encore de cargos. Les objets peuvent être des sous-marins également. Dans ce cas, il peut être considéré qu'un sous-marin ayant sombré en mer est un sous-marin qui présente des défaillances techniques significatives, lui empêchant de regagner la surface en sécurité.

Les objets peuvent aussi être des containers transportés sur des cargos, ou tout autre élément transporté dessus ou au-dessus d'une surface d'eau pour lesquels il peut être important de suivre et sécuriser le parcours, par exemple, des containers transportant des composés chimiques ou des matières dangereuses.

Le module d'éjection 100 comprend une enveloppe protectrice 101, une alimentation 102, un calculateur 103, des cartouches 200, ainsi qu'un système de libération desdites cartouches 300. Le module d'éjection 100, selon l'exemple de réalisation de la figure 1 est un cylindre circulaire droit d'axe A. Cet axe A est appelé « axe du module d'éjection ».

L'enveloppe protectrice 101 est configurée pour rendre le module d'éjection 100 imperméable. Elle peut comprendre deux éléments, une coque protectrice extérieure 101a et une couche de maintien intérieure 101b.

La coque protectrice extérieure 101a comprend du polyéthylène. Elle permet ainsi de protéger le module d'éjection 100 contre des chocs.

La couche de maintien intérieure 101b comprend de la mousse de polyuréthane. Elle protège notamment l'alimentation 102, le calculateur 103, les cartouches 200 ainsi que le système de libération des cartouches 300 de conditions environnementales inhabituelles. En effet, le module d'éjection 100 a pour but d'être utilisé lorsque les objets subissent des efforts inhabituels. Il est important que le module d'éjection 100 ne soit pas abimé par ces efforts inhabituels. De plus, la couche de maintien intérieure 101b est configurée pour maintenir différents éléments composant le module d'éjection et limiter leurs mouvements les uns par rapport aux autres.

L'alimentation 102 peut par exemple comprendre une batterie. Afin de garantir un meilleur fonctionnement et se prémunir d'une panne d'une batterie, l'alimentation 102 peut comprendre deux batteries 102a et 102b. Cette redondance peut ainsi renforcer la robustesse du module d'éjection 100.

L'alimentation 102 est configurée pour alimenter le calculateur 103 et le système de libération des cartouches 300. Pour cela, elle peut être reliée au calculateur 103 et au système de libération des cartouches 300 classiquement par des câbles.

Le calculateur 103 peut être une carte électronique, à circuit imprimé. Pour renforcer davantage la robustesse du module d'éjection 100, le calculateur 103 peut comprendre deux cartes électroniques, une première carte 103a principale et une deuxième carte dite de secours 103b.

Le calculateur 103 est configuré pour ordonner la libération des cartouches 200 à un intervalle de temps prédéfini. Pour cela, il transmet un ordre de libération au système de libération des cartouches 300.

Le système de libération des cartouches 300 est configuré pour libérer les cartouches 200 du module d'éjection 100 et le contenu de chaque cartouche 200 dans la mer lorsqu'un ordre de libération lui est transmis.

Chaque cartouche 200 comprend un élément surnageant 201, présentant une masse volumique plus faible que l'eau, en sorte de remonter et d'être visible à la surface de la mer lorsqu'il est libéré de la cartouche 200.

L'élément surnageant 201 peut être une encre d'une couleur déterminée par cartouche. Les cartouches 200 comprennent alors des encres de différentes couleurs, une par cartouche.

Les éléments surnageants 201 sont avantageusement de différentes couleurs afin que, une fois libérés en mer, ils puissent être distingués les uns des autres à l'œil nu. A cet effet, les éléments surnageants présentent une faible miscibilité chimique pour ne pas se mélanger entre eux.

Préférentiellement les éléments surnageants 201 ne présentent pas de composé pouvant altérer l'écosystème marin.

Ainsi, un observateur, selon la position des différentes encres, peut reconstruire la trajectoire de l'objet 1000 au long de son naufrage. Plus précisément, il voit, à la surface, des encres de différentes couleurs, qui ont été dispersées à des intervalles de temps prédéfinis et qui surnagent proches de la verticale de leur éjection. Les cartouches 200 sont configurées pour être libérées dans un ordre donné, associé à un code couleur des éléments surnageants 201 prédéfini et connu.

Par exemple, un module peut comprendre un ensemble des cartouches 200, chacune comprend un élément surnageant 201. L'ensemble des éléments surnageants du module peuvent présenter trois couleurs différentes. Les différents éléments surnageants des trois couleurs différentes peuvent être répartis chacun dans un même nombre de cartouches.

Ainsi, l'observateur peut à la fois estimer l'emplacement géographique du naufrage à l'aide du premier élément, l'heure du naufrage avec la couleur du dernier élément surnageant et le nombre de cartouches larguées par les modules, et la trajectoire suivie par l'objet 1000 en sombrant dans la mer (axe et taux de chute) par l'alignement des trois nappes de couleur depuis une vue aérienne. Dès lors, il pourra estimer la position finale de l'objet 1000, notamment grâce à des projections, recoupée à des informations de profondeur des fonds marins, engager une mission de sauvetage, ou de récupération d'éléments de l'objet 1000. A titre d'exemple, si l'objet 1000 est un aéronef, une mission de récupération des boites noires et des composants les plus polluants peut être envisagée dans des délais raccourcis, tant pour comprendre les causes de l'accident, que dans une optique assurancielle et de préservation des fonds marins et de l'environnement en général.

Les éléments surnageants 201 peuvent comprendre des particules, aptes à réfléchir la lumière. Il peut s'agir de particules de métal, comme de l'aluminium, ou encore de verres (silice), elles peuvent être traitées pour être brillantes. Ces particules sont donc réfléchissantes et capables de renvoyer la lumière ambiante ou artificielle. Cela les rend avantageusement visibles à la fois en plein jour et la nuit lorsqu'elles sont éclairées, par exemple par un observateur survolant la zone, par des drones munis d'un système de photographie ou d'enregistrement vidéo ou encore par des satellites d'observation de la Terre.

Les particules peuvent comprendre les composants suivants : $TiO_2$, $SiO_2$, $CaO$, $Na_2O$, $TiO_2$ et $BaO$.

Les éléments surnageants 201 peuvent également comprendre des particules phosphorescentes luminescentes. Les particules phosphorescentes peuvent être configurées pour absorber la lumière et la restituer lentement, ce qui les rend visibles même dans l'obscurité après avoir été exposées à la lumière pendant un certain temps, notamment le jour. Cela peut avantageusement les rendre visibles la nuit à la surface de la mer.

Les éléments surnageants 201 peuvent également comprendre des particules fluorescentes. En effet, les particules fluorescentes peuvent être configurées pour émettre de la lumière lorsqu'elles sont exposées à une source ultraviolette. Elles peuvent être visibles à la fois de jour et de nuit en étant éclairées par une lumière ultraviolette. Ainsi, un observateur projetant de la lumière ultra-violette, même la nuit, est en mesure de localiser les éléments surnageant 201.

Les cartouches 200, d'après la figure 1 et la figure 2, sont disposées selon une configuration radiale, avec une distribution régulière autour de l'axe A du module d'éjection 100. Les cartouches 200 peuvent être au nombre de 24 par module d'éjection 100.

Les cartouches 200 sont chacune de forme cylindrique à section droite circulaire, comme illustré en figure 3. Elles comprennent, d'après la figure 3, une première extrémité 202, dite extrémité intérieure orientée vers le l'axe A du module d'éjection 100, et une deuxième extrémité 203, dite extrémité extérieure, orientée vers l'extérieur du module d'éjection 100. La deuxième extrémité 203 peut comprendre un opercule 204 configuré pour être rompu par une forme pointue exerçant sur lui un effort selon un axe de la cartouche 200.

Chaque cartouche 200 peut comprendre un piston 210 représenté en figure 3. Le piston 210 comprend une première extrémité 211, dite extrémité intérieure, représentée en figure 2. Elle est orientée vers l'axe A du module d'éjection 100 et a une forme en biseau.

Le piston 210 comprend une deuxième extrémité 212, dite extrémité extérieure présentant une forme pointue vers l'extérieur du module d'éjection 100. La deuxième extrémité 212 est configurée pour, que lorsque le piston est mis en mouvement selon un axe le long de ladite cartouche, percer un opercule 204 sur la deuxième extrémité 203 de la cartouche pour libérer l'élément surnageant 201 contenu dans la cartouche.

Le piston 210 peut être métallique ou réalisé dans un matériau composite.

Le piston 210 peut être mis en mouvement par le système de libération 300. Ledit système de libération comprend un moteur 301, de type pas à pas positionné sur l'axe A dudit module d'éjection 100, relié à un bras 302 comprenant une extrémité 303 en forme en biseau permettant de mettre en mouvement le piston 210 lorsque ledit moteur pas à pas 301 est en mouvement.

Le bras 302 peut être métallique ou en matériau composite. Il peut présenter une forme de barre rectangulaire ou de cylindre circulaire droit. Lorsque que le moteur pas à pas 301 est en mouvement, il fait tourner le bras 302 d'un angle représentant un pas angulaire. Le pas angulaire peut être défini à une valeur égale à 360° divisée par le nombre de cartouches contenues dans le module d'éjection 100, ici 15°.

Lors de sa rotation, la première extrémité 303 du bras 302 rentre en contact avec l'extrémité 211 du piston 210, et met le piston en mouvement selon un axe de la cartouche 200. Le piston 210 perce alors l'opercule 204, et libère alors l'élément surnageant 201 de la cartouche 200 dans la mer.

Le moment s'écoulant entre deux mouvements du bras est ainsi l'intervalle de temps prédéfini entre deux libérations d'éléments surnageants dans deux cartouches 200.

Cet intervalle de temps peut être défini par un utilisateur.

Le module d'éjection peut également comprendre un dispositif de communication 104 alimenté par l'alimentation 102. Le dispositif de communication est configuré pour recevoir des informations d'un utilisateur via une application et les transmettre au calculateur 103. Il peut comprendre une carte RFID (Radio-Frequency Identification), qui présente l'avantage d'être peu consommatrice en énergie

Le dispositif de communication 104 peut ainsi être configuré pour transmettre des intervalles de temps de libération d'éléments surnageants entre les cartouches défini par un utilisateur. Ainsi, les éléments surnageants 201 sont libérés des cartouches 200 à intervalle de temps régulier. Les intervalles de temps de libération des cartouches peuvent être identiques. Par exemple, ils peuvent être d'une durée d'une heure.

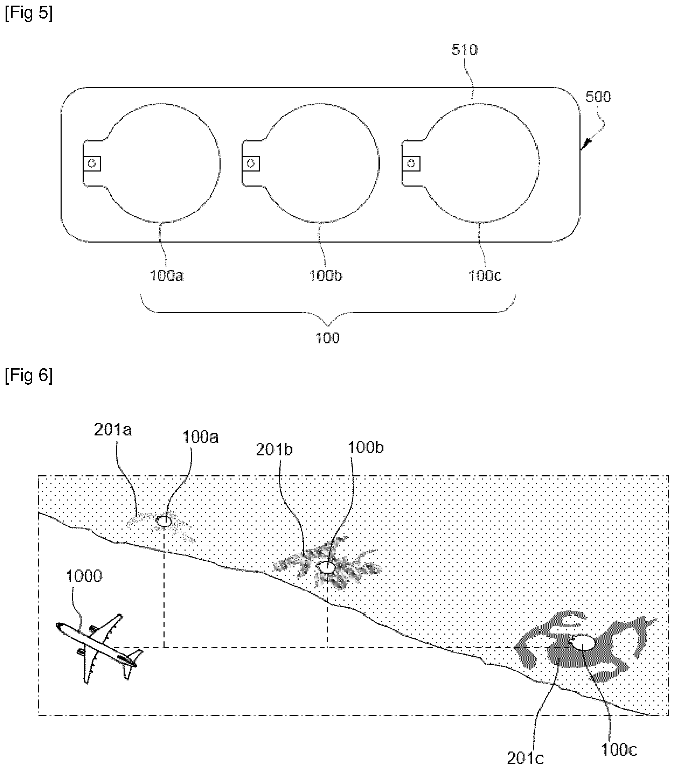

L'invention concerne également un système 500 d'éjection. Le système d'éjection comprend le module d'éjection 100 et un support d'éjection 510, représenté en figure 5.

Le support présente deux configurations, une première configuration de soutien dans laquelle le support d'éjection supporte le module d'éjection 100, et une deuxième configuration, une configuration d'éjection, dans laquelle le support d'éjection éjecte le module.

Le système 500 comprend un mécanisme d'éjection 520 configuré pour éjecter le module lorsqu'une valeur issue d'un capteur d'état de l'objet est supérieure à un seuil donné, représentant un comportement anormal de l'objet.

Chaque support d'éjection étant configuré pour éjecter un module à une profondeur prédéfinie. Ainsi, le support d'éjection 510 peut être configuré pour se libérer lorsqu'il subit un effort correspondant à l'effort exercée par l'eau à une profondeur donnée lorsqu'il est immergé.

Le support d'éjection 510 peut comprendre un ressort 521. Le support accumule de l'énergie potentielle lorsqu'il se comprime. Il peut être fabriqué à partir d'un matériau élastique tel que l'acier.

Le support d'éjection 510 peut également comprendre une goupille de déclenchement 522, qui présente deux positions, une position verrouillée et une position ouverte. Lorsque la pression de l'eau atteint un certain seuil correspondant à une profondeur donnée, la pression de l'eau exerce une force sur la goupille de déclenchement 522, la déplaçant de sa position verrouillée vers sa position ouverte. La goupille peut être réalisée en acier inoxydable.

Le support d'éjection 510 peut également comprendre un mécanisme de verrouillage 523. Il est configuré pour maintenir le ressort comprimé, et lorsque la goupille de déclenchement 523 est en position ouverte, il libère le ressort 521.

La figure 5 représente un système comprenant trois modules et trois supports d'éjection.

Les éléments surnageants compris dans les cartouches d'un même module ayant des paramètres L*, a* et b* peuvent être situés dans un intervalle prédéfini dans l'espace chromatique L*a*b* CIE 1976, CIE étant l'acronyme de Commission internationale de l'éclairage.

L'écart $\Delta E_{ab}$ entre les couleurs de deux éléments surnageants de deux cartouches d'un même module peut être défini comme :

$$\Delta E_{ab} = \sqrt{(\Delta L^*)^2 + (\Delta a^*)^2 + (\Delta b^*)^2}$$ (Equation 1)

Avec :

- $\Delta L^*$ la différence entre les clartés des deux éléments surnageants,
- $\Delta a^*$ la différence entre les valeurs a* correspondant aux valeurs sur un axe vert - rouge des deux éléments surnageants,
- $\Delta b^*$ la différence entre les valeurs b* correspondant aux valeurs sur un axe bleu - jaune des deux éléments surnageants.

Ainsi, il est possible pour un observateur de déterminer de quel module est issu l'élément surnageant. Aussi, l'observateur est capable de différencier les éléments surnageants de chaque cartouche, et de les classer dans un ordre d'éjection.

Les éléments surnageants 201 contenus dans les cartouches 200 d'un même module 100 peuvent être sensiblement de la même couleur, c'est-à-dire qu'ils ne sont pas différentiables à l'œil nu lorsqu'ils sont libérés en mer.

Comme représenté en figure 6, pour un mode de réalisation comprenant trois modules 100a, 100b et 100c, les éléments surnageants respectivement 201a, 201b, 201c contenus dans les modules 100a, 100b et 100c respectivement sont différentiables à l'œil nu.

Les éléments surnageants contenus dans chaque cartouche d'un même module peuvent être de la même couleur. Ils peuvent aussi être d'une couleur proche.

Par exemple, les éléments surnageants des cartouches 200 du module 100a peuvent être de différentes teintes de rouge, les éléments 100b surnageants des cartouches 200 du module 100b peuvent être de différentes teintes de jaune et enfin, les éléments 100c surnageants des cartouches 200 du module 100c peuvent être de différentes teintes de violet.

Dans cette configuration, les éléments surnageants 201 contenus dans les cartouches 200 de modules différents sont différentiables à l'œil nu lorsqu'ils sont libérés en mer.

Ainsi, cela permet d'avoir une information sur la profondeur atteinte par l'objet (intervalle prédéfini pour chaque support d'éjection), ainsi qu'une information temporelle (une couleur différente pour chaque cartouche).

Le système 500, comme représenté en figure 5, peut être positionné sur un avion 1000. Il peut être intégré dans un empennage arrière 1001, comme représenté en figure 4, une surface extérieure du système positionnée vers l'extérieur de l'avion 1000 marquant une continuité avec l'empennage, et la totalité d'une l'épaisseur du système 500 étant contenu dans ledit empennage 1001.

Le système 500 peut également être intégré aux avions existants sans modifier l'empennage existant. En effet, le système 500 peut être entre autres fixé sur l'empennage arrière de l'avion 1000. Cet emplacement est particulièrement avantageux car l'empennage arrière 1001 est l'un des éléments se détériorant le moins lors de cas de crash d'avion.

**Autre exemple de mode de réalisation**

Les autres éléments du précédent mode de réalisation sont identiques.

Dans le cadre d'un système d'éjection 500 comprenant plusieurs modules d'éjection 100 et le même nombre de supports d'éjection 510, lesdits modules d'éjections étant configurés pour être éjectés dans un ordre prédéfini. Lesdits supports d'éjection peuvent être configurés pour permettre l'éjection de leurs modules d'éjection lorsque le module précédent, selon l'ordre prédéfini, a été éjecté.

Les supports d'éjection peuvent également être configurés pour éjecter le module d'éjection dans un intervalle de temps prédéfini par rapport à un instant initial.

Pour cela, le support d'éjection 510 peut comprendre un calculateur de support 503, comme une carte électronique, paramétrable, pour envoyer un ordre au mécanisme d'éjection 520 d'éjection du module à un moment prédéfini.

La carte électronique et le mécanisme d'éjection peuvent être alimentés grâce à une source d'énergie. Il peut s'agir d'une batterie.

Le système d'éjection 500 peut également être configuré pour que la batterie puisse être rechargée par un chargeur embarqué relié à l'électricité de bord, afin d'être autonome, sans apport d'énergie électrique externe pendant le temps d'éjection desdits modules. Ainsi, le système d'éjection 500 peut fonctionner en cas de défaillance électrique de l'objet 1000.

Dans un mode de réalisation dans lequel l'objet est un container, le système peut être intégré de façon temporaire ou définitive au container, préférentiellement sur un endroit ne supportant pas un autre container ou d'autres efforts correspondant à l'effort nécessaire au basculement de la goupille de déclenchement 522 vers sa position ouverte, pour ne pas abimer le système lorsque le container est dans une configuration sécurisée.

Il peut notamment être positionné au niveau d'un renfoncement d'une porte d'un container.

Il peut également être attaché sur une surface extérieure du container, de telle sorte que la totalité de l'épaisseur du système 500 soit située à l'intérieur dudit container.

Dans un mode de réalisation dans lequel l'objet est un bateau, le système peut être intégré en haut de la coque du bateau par exemple. Le mécanisme d'éjection 520 peut être manuel. Le système peut être conçu pour être installé de façon amovible, afin de laisser le choix à un utilisateur de l'intégrer ou non sur son objet, de manière temporaire ou non.

Dans un mode de réalisation dans lequel l'objet est un engin sous-marin, par exemple bathyscaphe, le mécanisme d'éjection 520 peut être manuel. Ainsi, dans ce mode de réalisation particulier, les modules d'éjection ne sont pas configurés pour être libérés à une profondeur donnée. Ainsi, lorsqu'un opérateur estime que le sous-marin présente des défaillances techniques significatives et se trouve en perdition, lui empêchant de regagner la surface en sécurité, il peut actionner le mécanisme d'éjection 520.

Le mécanisme d'éjection 520 peut être une goupille de déclenchement dont une partie est positionnée à l'intérieur du sous-marin par exemple, le module d'éjection étant à l'extérieur. La goupille de déclenchement peut, entre autres, être déclenchée manuellement.

Dans un autre mode de réalisation dans lequel l'objet est un aéronef, le mécanisme d'éjection 520 est configuré pour éjecter le module lorsqu'une valeur issue d'un capteur d'état 106 de l'objet est supérieure à un seuil donné, représentant un comportement anormal de l'objet. Le capteur d'état 106 est relié au dispositif de communication 104, qui est configuré pour recueillir l'information du capteur et la transmettre au calculateur de support 503. Le calculateur de support 503 peut envoyer un ordre d'éjection au mécanisme d'éjection 520 du module à un moment prédéfini.

Le capteur d'état peut être un ou plusieurs parmi capteur d'hygrométrie, de température, de pression hydraulique, ou un capteur d'état des systèmes de l'aéronef

**Revendications**

1. Module d'éjection (100) de cartouches (200) pour la localisation d'objet (1000) ayant sombré en mer, comprenant une enveloppe protectrice (101) rendant ledit module imperméable, comprenant :

   • au moins trois cartouches (200) comprenant chacune un élément surnageant (201) de masse volumique plus faible que celle de l'eau et visible à la surface de l'eau lorsqu'il est libéré de la cartouche, et
   • un système de libération (300) des cartouches (200) configuré pour libérer lesdites cartouches (200) et l'élément surnageant (201) compris dans chaque cartouche (200) dans la mer lorsqu'il reçoit un ordre de libération,

ledit module étant **caractérisé en ce:**

> • **qu'**il comprend en outre un calculateur (103) configuré pour transmettre un ordre de libération des cartouches à un intervalle de temps prédéfini au système de libération,
> • **que** l'élément surnageant compris dans l'une des trois cartouches est d'une couleur différente des éléments surnageants des deux autres cartouches de telle sorte que les trois éléments surnageants issu respectivement des trois cartouches soient différentiables les uns des autres à l'œil nu une fois libérés dans la mer.

2. Module d'éjection (100) selon l'une quelconque des revendications précédentes présentant une forme de cylindre circulaire droit, et dans lequel les cartouches (200) sont disposées selon une configuration radiale, avec une distribution régulière autour de l'axe du module (100).

3. Module d'éjection (100) selon la revendication 2, dans lequel :

> • chaque cartouche (200) comprend un piston (210) comprenant une première extrémité (211) d'une forme en biseau vers l'axe du module et une deuxième extrémité (212) d'une forme pointue vers l'extérieur du module d'éjection permettant de percer un opercule (204) sur une extrémité extérieure de la cartouche (200) pour libérer l'élément surnageant (201) compris dans la cartouche lorsque le piston (210) est en mouvement selon un axe le long de ladite cartouche,
> • le système de libération comprend un moteur pas à pas (301) positionné sur l'axe du module d'éjection relié à un bras (302) comprenant une extrémité en forme en biseau (303) permettant de mettre en mouvement ledit piston lorsque ledit moteur pas à pas est en mouvement.

4. Module d'éjection (100) selon l'une quelconque des revendications précédentes, dans lequel l'élément surnageant (201) comprend des particules aptes à réfléchir la lumière.

5. Module d'éjection (100) selon l'une quelconque des revendications précédentes, comprenant au moins trois cartouches (200) et dans lequel le système de libération (300) des cartouches est configuré pour libérer les éléments surnageants (201) des cartouches (200) à intervalle de temps régulier.

6. Module d'éjection (100) selon l'une quelconque des revendications précédentes, comprenant un dispositif de communication (104) configuré pour envoyer et recevoir des informations issues d'une application.

7. Système d'éjection (500) comprenant au moins un module d'éjection (100) selon l'une quelconque des revendications précédentes et au moins un support d'éjection (510), le support (510) comprenant deux configurations, une première configuration de soutien dans laquelle le support d'éjection (510) supporte le module d'éjection (100) et une configuration d'éjection, dans laquelle le support d'éjection (510) éjecte le module d'éjection (100).

8. Système d'éjection (500) selon la revendication 7 , comprenant plusieurs modules d'éjection (100) et un support d'éjection (510) par module d'éjection (100), chaque support d'éjection étant configuré pour éjecter un module d'éjection (100) à une profondeur prédéfinie ou un temps prédéfini, les éléments surnageants (201) compris dans les cartouches (200) d'un même module d'éjection (100) étant, une fois libérés dans la mer, différentiables à l'œil nu des éléments surnageants (201) libérés à la mer provenant des cartouches (200) des autres modules d'éjection (100).

9. Système d'éjection (500) selon l'une des revendications 7 à 8, dans lequel les éléments surnageants (201) compris dans les cartouches d'un même module d'éjection ont des paramètres a*, b*, L* situés dans un intervalle prédéfini dans l'espace chromatique L*a*b* CIE 1976, CIE étant l'acronyme de la commission internationale de l'éclairage.

10. Système d'éjection (500) selon l'une des revendications 7 à 9, configuré pour être positionné sur un objet présentant un risque de perdition en mer.

11. Système d'éjection (500) selon l'une des revendications 7 à 10, dans lequel le support d'éjection comprend un mécanisme d'éjection (520) configuré pour éjecter le module d'éjection (100) lorsqu'une valeur issue d'un capteur d'état (106) de l'objet (1000) est supérieure à un seuil donné, représentant un comportement anormal de l'objet (1000).

[Fig 1]

[Fig 2]

[Fig 3]

[Fig 4]

[Fig 5]

[Fig 6]

Europäisches
Patentamt

European
Patent Office

Office européen
des brevets

## RAPPORT DE RECHERCHE EUROPEENNE

**Numéro de la demande**

EP 24 20 5760

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2012/100818 A1 (SANTIAGO FONTAINA JOSE MARIA [ES]) 26 avril 2012 (2012-04-26) | 1,2,4-7, 9-11 | INV. B64D1/02 |
| A | * abrégé; figures 1-3 * * alinéas [0030] - [0037] * | 3,8 | B63B22/00 B63B22/16 B64D25/20 |
|  | ----- |  |  |
| Y | US 2014/177146 A1 (BARIZZA LAURENT [FR] ET AL) 26 juin 2014 (2014-06-26) | 1,2,4-11 |  |
| A | * abrégé; figures 2-5b * | 3 |  |
|  | ----- |  |  |
| Y | US 2012/138741 A1 (FABRE CHRISTIAN [FR] ET AL) 7 juin 2012 (2012-06-07) | 1,4-11 |  |
| A | * abrégé; figures 1-6B * * alinéas [0043] - [0045], [0054] - [0055], [0065], [0068] * * alinéas [0073], [0076], [0078], [0089], [0097] * | 2,3 |  |
|  | ----- |  |  |

**DOMAINES TECHNIQUES RECHERCHES (IPC)**

B64D
B63J
B63B

Le présent rapport a été établi pour toutes les revendications

| Lieu de la recherche | Date d'achèvement de la recherche | Examinateur |
|---|---|---|
| Munich | 11 décembre 2024 | Leoty, David |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 5760

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2024

| Document brevet cité au rapport de recherche | Date de publication | Membre(s) de la famille de brevet(s) | Date de publication |
|---|---|---|---|
| US 2012100818 A1 | 26-04-2012 | AR 077104 A1 | 03-08-2011 |
| | | BR PI1011371 A2 | 15-03-2016 |
| | | CA 2757193 A1 | 23-12-2010 |
| | | CN 102428003 A | 25-04-2012 |
| | | EP 2444321 A1 | 25-04-2012 |
| | | ES 2371189 A1 | 28-12-2011 |
| | | ES 2529208 T3 | 18-02-2015 |
| | | JP 2012530009 A | 29-11-2012 |
| | | RU 2011143939 A | 27-07-2013 |
| | | US 2012100818 A1 | 26-04-2012 |
| | | WO 2010146196 A1 | 23-12-2010 |
| US 2014177146 A1 | 26-06-2014 | FR 3000267 A1 | 27-06-2014 |
| | | US 2014177146 A1 | 26-06-2014 |
| US 2012138741 A1 | 07-06-2012 | EP 2460728 A1 | 06-06-2012 |
| | | FR 2968276 A1 | 08-06-2012 |
| | | US 2012138741 A1 | 07-06-2012 |

EPO FORM P0460

Pour tout renseignement concernant cette annexe : voir Journal Officiel de l'Office européen des brevets, No.12/82